# EUROPEAN PATENT APPLICATION

(11) **EP 3 836 478 A1**
(43) Date of publication of application: **16.06.2021**
(21) Application number: 19215060.5
(22) Date of filing: 10.12.2019
(51) Int. Cl.: H04L 9/08, H04L 9/30, G06F 21/60, H04L 29/06

(54) **METHOD AND SYSTEM OF DATA ENCRYPTION USING CRYPTOGRAPHIC KEYS**

(71) Applicant: Oktawave Sp. z o.o., 02-672 Warszawa (PL)
(72) Inventor: Zagórski, Filip, 54-142 Wroc aw (PL); Jackowski, Bart omiej, 03-477 Warszawa (PL)
(74) Representative: Wroblewski, Marcin Jan

(57) **Abstract**

A computer-implemented method for encrypting data using cryptographic keys comprising the following steps: creating (101) a cryptographic key using the interface component (222) of the software security module (220), saving (102) using the interface component (222) of the software security module (220) the generated key in the storage component enclave (211) of the hardware security module (210), determining (103) the alias lifetime using the interface component (222) of the software security module (220), selecting (104) using the interface component (222) of the software security module (220), the range of IP addresses to which the given alias is to be limited, indicating (105) using the interface component (222) of the software security module (220), for which cryptographic operations a given alias may be used, saving (106) the created alias in memory using the component interfaces (222) of the software security module (220), performing (107) cryptographic operations with an alias using the cryptographic operations component (224), recording (108) each cryptographic operation performed in the system (200) using the alarm component (226) of the security module (220), storing (109) data on the cryptographic operation performed using the hardware security module (210) in the storage component (211). A system comprising a hardware security module (210) with a storage component (211) and a software security module (220) with an authentication component (221), an interface component (222), a key management component (223), a cryptographic operations component (224), a key policy component (225) and an alarm component (226) characterized in that the hardware security module (210) is adapted to create aliases using cryptographic keys stored by the storage component (211).

## Description

### Technical field

The subject of the invention is a method of data encryption using cryptographic keys and a system for its implementation.

### State of the art

The US patent US7639819B2 describes a system which allows the use of an external data security module in the database without the necessity to modify database applications. After a request to encrypt or decrypt data has been sent to the database of the presented system, this operation is carried out using the said external module in a transparent manner for this database. Additionally, in response to the sent request, the system sends a previously encrypted column key from the data encryption database contained within it to an external security module, whereby the encrypted column key is encrypted using the Master Key, which exists only within this module. In order to obtain the said column key, the system decrypts it in an external security module and then returns it to the database. The key obtained in this way is used to decrypt data from the database. In the end, the system erases the column key from the memory in the database.

The US patent application US20180205711A1 describes a self-encrypting key management application which allows receiving and generating encryption keys. Tokenization service is executed here. These keys can be stored in secure enclaves in the processing device's memory. The request to perform a cryptographic operation related to a cryptographic key may originate in another application which is stored on the same or some other server operating within the same cluster. Furthermore, cryptographic operations performed by a self-encrypting key management application can be aimed at generating output data for another application.

The US patent US7278582B1 describes a processing circuit which is integrated with an HSM (Hardware Security Module) chip card. The processing circuit is adapted to operate according to a set of program instructions stored in the memory integrated with the HSM chip card. The said set of program instructions contains instructions for implementing a set of Public Key Cryptography Standards (PKCS). The said standards relate to the processes of generating and storing the Master Key. The Master Key should be stored in the memory which is integrated with the HSM chip card. In addition, using the Master Key makes it possible to directly control the management of standard chip cards using the said HSM chip card.

Another hardware security model which is available for sale is YubiHSM 2 used for protecting Root Keys against copying with, for example, malware. YubiHSM 2 allows securing cryptographic keys throughout their entire life cycle, i.e. from secure generation, through attestation, storage, to distribution and secure backup, all of which are the keys used by organizations that use Microsoft Active Directory certificates. YubiHSM 2 functions are implemented through integration with open source software and the software development kit (SDK) for both open source and commercial applications. The YubiHSM 2 module is most often used in hardware generation and verification of digital signatures, as well as securing loT (Internet of Things) gateways and cryptocurrency exchanges.

The existing systems for encrypting data using cryptographic keys contain hardware security modules which occupying physical space in data centers. Furthermore, these systems have limited scalability, which in turn reduces their performance as the operating load increases. If the hardware security module is not connected directly to the server on which the application which is using it runs, an additional delay in data transmission occurs. Additionally, each newly added instance of the hardware security module must be manually connected to the server hosting such a system.

In traditional symmetrical data encryption systems, using cryptographic keys, after obtaining access to a given key, it is possible to both encrypt and decrypt data, which increases the risk of intercepting sensitive data for users of a given system.

In traditional asymmetric data encryption systems a pair of keys is created: private key and public key. By knowing the public key, one can encrypt data that can only be decrypted by a private key holder. Such a system is safer than the symmetrical one, but its performance is even a thousand times lower than that of the symmetrical one.

Therefore, it seems advisable to develop a system which would ensure encryption efficiency at the level of the traditional symmetrical systems while maintaining a security level which would be comparable or better than the traditional asymmetrical systems.

### The summary of the invention

The essence of the invention is a computer-implemented method of data encryption using cryptographic keys comprising the creation of a cryptographic key using the interface component of the security software module. This key is then saved using the software security module interface component in the hardware storage component enclave of the security module. Next, an alias is created for the key using the interface component of the security software module and its lifetime is determined. In the next step, using the interfaces component of the security module, the range of IP addresses to which the alias should to be limited is selected. Then, using the interface component of the security software module, it is indicated for which cryptographic operations a given alias can be used. These may be operations such as encryption, decryption, signature, signature verification, creating message authentication code (MAC), or MAC verification or a shared secret agreement. In the next step the created alias is saved in memory using the interface component of the software security module. Next, cryptographic surveys are performed using an alias with the use of the cryptographic operations component. These may include encryption, decryption, signatures, signature verification, MAC (message authentication code), MAC verification or shared secret agreements. Then, each cryptographic operation performed in the system is recorded using the security module software alarm component, followed by saving the data in the data storage component for each cryptographic operation performed using the hardware security module.

Preferably, the cryptographic operation performed as part of the method of the invention includes downloading data and an alias from the ordering system (client), checking the compliance of the alias identifier with the alias token. Then, the compliance of the ordered operation with the key type is checked. It is also checked whether the restrictions on the use of alias specified in the policy related to the alias are met, and in the case of a negative verification carried out in any of the three previous steps, an error is returned. If the results of the verification operations are correct, then the cryptographic operation is performed on the downloaded data using the key to which the alias is assigned. The result of the operation is passed to the ordering system.

Another aspect of the invention is a computer program comprising program code means for performing all of the steps of the computer-implemented method of the invention when the said program is running on a computer.

The invention also relates to a computer-readable medium storing computer instructions which perform all the steps of the computer-implemented method implemented on a computer.

Furthermore, the invention relates to a system for carrying out the method according to the invention comprising a hardware security module with a storage component, and a software security module with an authentication component, interface component, key management component, cryptographic operation component, key policy component and an alarm component characterized in that the hardware security module is adapted to create aliases using cryptographic keys stored by the storage component.

Preferably, the storage component of the hardware security module comprises enclaves adapted to store sensitive data.

Traditionally, in conventional symmetric data encryption systems using cryptographic keys, after receiving access to a given key, both encryption and decryption are possible. In the system according to the invention, the function of the generated alias of a given key can be limited to encryption only, so that if the data restricted in this way is revealed, the person conducting the attack on the system will not be able to decrypt the protected information. Hence, by using policies which impose restrictions for a given alias on the type of operation, the functionality of asymmetric schemes can be achieved (someone has access to an alias that only allows encrypting data) while maintaining the performance of symmetric schemes.

Additionally, creating multiple aliases for given keys and giving them limited access, for example based on IP, allows simplifying the process of monitoring the system environment. If each system node has a separate alias for a single cryptographic key then:
- it is easier to detect an infected machine, e.g. by observing the execution of multiple queries to the system;
- data is encrypted with precisely the same key, which simplifies key management and re-encryption.

The system according to the invention ensures scalability enabling an increase in its performance, so that cryptographic operations can be safely performed on the same hardware security module with which the software security module interacts within a given server.

What's more, the system of the invention has built-in encryption support which maintains the Format Preserving Encryption (FPE). As a result, no modification of the stored data format is required, as is the case with conventional encryption schemes, for example, the encrypted credit card number still has the format of the correct credit card number.

The system according to the invention also allows secure storage of passwords. Passwords are coded using Memory-Hard Functions, but these functions require the use of a specified number of memory cells to perform the calculation process. This parameter can be freely configured. Using less memory results in an exponential increase in computation time. As a result, dedicated Application Specific Integrated Circuit (ASIC) devices which effectively crack passwords usually stored using the PBKDF/SHA1/SHA2/SHA3 function cannot be used to crack passwords stored in this way.

The disclosed system for encrypting data using cryptographic keys enables immediate support of functions enabling fast creation of secure multilateral protocols, such as encrypted transfer, commitment schemes, secret sharing and evidence with zero knowledge, on the basis of which it is possible to build any secure multilateral calculation scheme.

In the presented system, the right to perform a given operation may be based on one of the following authentication methods: token-based, symmetrical JWT (JSON Web Token), based on certificates (RSA signatures).

### Description of the figures

The subject of the invention is shown in the embodiment in the drawing, in which:
Fig. 1 schematically shows a method of data encryption using the cryptographic keys of the invention;

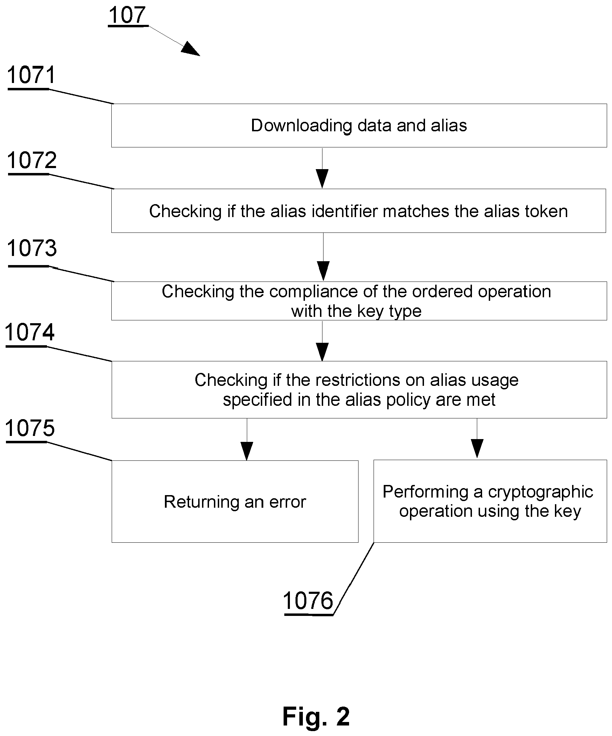

Fig. 2 schematically shows a method of performing a cryptographic operation using an alias;

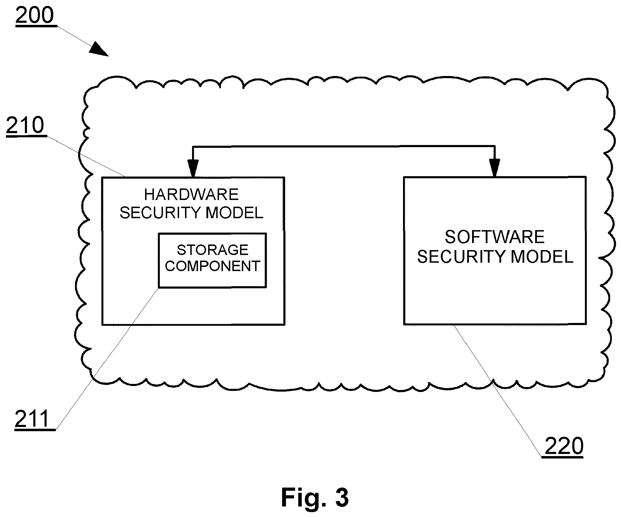

Fig. 3 shows a data encryption system using cryptographic keys according to the invention;

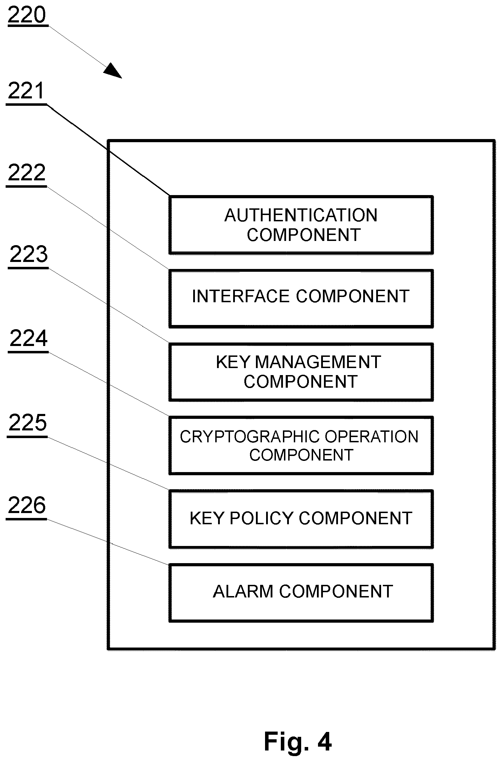

Fig. 4 schematically shows a software security module.

### Notation and nomenclature

Some parts of the detailed description below are presented as part of procedures, data processing steps, or other representations of symbolic bit data operations which can be performed in computer memory. Therefore, logical steps are performed by the computer, which requires physical manipulation of physical quantities. Usually, these values take form of electrical or magnetic signals which are suitable for storage, transmission, connection, comparison or other ways of manipulating data in a computer system. Due to common use, these data are referred to as signals, time courses, bits, packets, messages, values, elements, symbols, signs, terms, numbers and the like. In addition, all of these terms, or the like, should be identified with their corresponding physical quantities, and are merely convenient terms for these physical quantities. Terms such as "processing" or "creating" or "sending" or "performing" or "determining" or "detecting" or "receiving" or "selecting" or "calculating" or "generating" or similar, refer to activities and processes of a computer system which manipulates and transforms data represented as physical (electronic) quantities in registers and computer memories into other data similarly represented as physical quantities in memories or registers or other information stores. A computer-readable medium (memory) as defined herein may typically be nonvolatile and/or include a non-transitory device. In this context, a non-transitory storage medium may contain a device which may be material, which means that the device has a specific physical form, although the device may change its physical state. Thus, for example, the term non-transitory refers to a device which remains material although it may change its state.

### Embodiment

### Encryption method

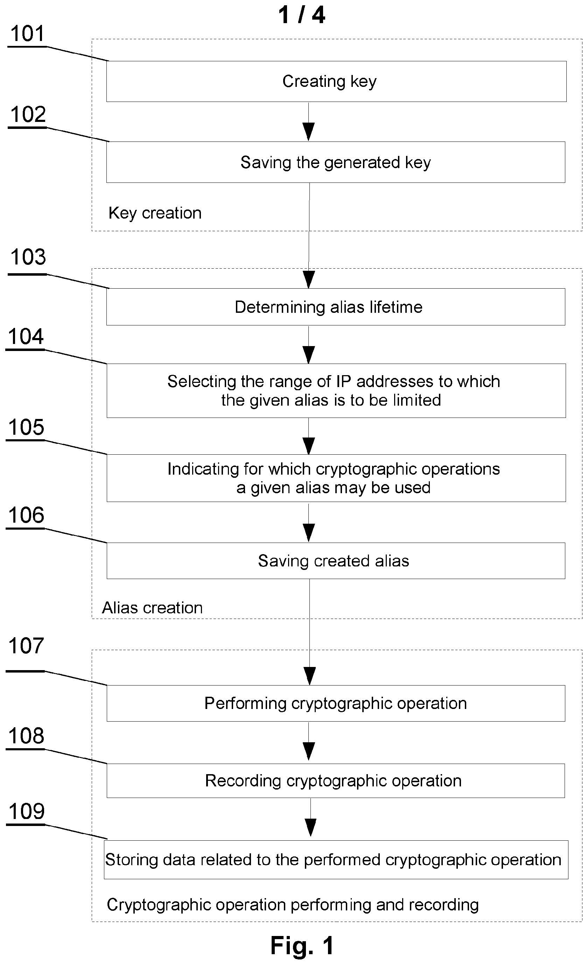

Fig. 1 schematically shows a method of data encryption using the cryptographic keys of the invention.

In the first step 101, a cryptographic key is created using the interface component 222 of the security software module 220 having the following parameters:
- a unique ID, for example, keylD *123:key*
- token
- key type (AES/RSA/DH/EIGamal)
- key policy in accordance with the NIST SP 800-57 standard along with two parameters: the encryption period and the cryptographic period.

The said encryption period designates a time interval in which the key can be used to encrypt or create a digital signature, and the cryptographic period designates a time interval in which the key can be used to decrypt or verify digital signatures.

Then, in step 102, the generated key is saved, using the interface component 222 of the software security module 220, in the enclave of the storage component 211 of the hardware security module 210.

Then the creation of an alias for the said cryptographic key begins. Access to this alias is possible using the key management component 223 of the software security module 220. Initially, using the interface component 222, the lifetime of the alias is determined 103. For example, it may be 3 days: NOW() + 3 DAYS.

Then, using the interface component 222, the range of IP addresses to which the alias is to be limited is selected 104. For example, this parameter can be defined as: ANY ("*"), which means that the indicated cryptographic operation will be performed for each IP address detected by the system. Another time, it may be, for example, 10.10.2.11-15, which means that the indicated cryptographic operation will be performed for users from this narrowly defined set of IP addresses. As a result, it simplifies monitoring security in the defined system environment.

Then, using the interface component 222, it is indicated 105 for which cryptographic operations a given alias can be used. For example, it may only be an encryption operation: ock:encrypt or both an encryption and a decryption operation.

In the next step, the created alias is saved to memory 106 using the interface component 222 of the software security module 220.

Based on one key, multiple aliases can be created, and each of them will have the following parameters:
- unique ID
- token
- a policy restricting its use:
   ∘ up to a specified period of time,
   ∘ IP addresses for which a given cryptographic can be performed,
   ∘ type of operation which can be performed with a given alias

Below a full description of the alias for a sample Advanced Encryption Standard (AES) key allowing only encryption:

```
       AliasDescription {
       keyld: ock:123:AES:alias/444
      token: d0b3e92308-f4e3-b11d-592f-f2eaafb7a6
       policies: {
         action: [ock:Encrypt]
         expirationDate: 2018-12-20
         allowedlp:*
}
}
```

In the case of an alias intended to perform encryption and decryption operations, its description may look like this:

```
       AliasDescription {
   keyld: ock:123:AES:alias/788
  token: 8291f7f512-ec9d-f3af-c2c9-5f22c6cdc2
   policies: {
     action: [ock:lnfo, ock:Encrypt, ock:Decrypt]
     expirationDate: Never
     allowedlp: 10.10.2.11-18
}
}
```

In the next step, cryptographic operations are performed 107 with an alias and using the cryptographic operations component 224.

Each operation performed in the data encryption system using cryptographic keys is recorded 108 using the alarm component 226 of the software security module 220, and the data related to the invoked encryption are stored 109 on at least one system server using the security module 210, namely:
- date and time of the request
- IP address and port of the requester
- operation identifier
- Key id

### Cryptographic operation

The cryptographic operation performed in step 107 of the encryption method may include:
- encryption,
- decryption,
- signature,
- signature verification,
- MAC creation (message authentication code)
- MAC verification,
- shared secret agreement.

Cryptographic operation 107 comprises the following steps. Data and alias are collected 1071 from the ordering system - the client application, and then compliance of the alias identifier with the alias token is checked 1072. In the next step, the compliance of the ordered operation with the key type is checked 1073, and then it is checked 1074 whether the restrictions on using the alias as specified in the alias policy are met. The above is performed to check whether the call meets the defined cryptographic key data policy rules set by the key policy component 225 of the security software module 220. If any of the conditions 1072, 1073, 1074 is not met, the system 200 using the interface component 222 returns an error message. This will happen if, for example:
- the call is made from an unauthorized IP address,
- the call is made after the encryption expiry date, e.g. after - 2018-12-20,
- the alias identifier is used to send a request for a decryption operation and is intended only for encryption, which is related to non-compliance with the policy assigned to a given alias or after the conditions 1072, 1073 are not met.

If verifications of 1072, 1073, 1074 are successful, then a cryptographic operation is performed 1076 using the key to which the alias is assigned on the downloaded data.

For example, the encryption call for the alias

```
       AliasDescription {
       keyld: ock:123:AES:alias/444
      token: d0b3e92308-f4e3-b11d-592f-f2eaafb7a6
       policies: {
         action: [ock:Encrypt]
         expirationDate: 2018-12-20
         allowedlp:*
}
}
       looks as follows:
       {"Keyld":"ock:123:AES:alias/444","Token":"d0b3e92308-f4e3-b11d-592f-
       f2eaafb7a6","Plaintext":"Alice has a cat","Mode":"AES-GCM"}
```

### Encryption system

The system for encrypting data using cryptographic keys according to the invention 200 works based on a cloud computing, thanks to which its entire functionality is implemented, including performing cryptographic operations. As part of cloud computing, at least one server can be used.

The data encryption system using cryptographic keys 200 includes a hardware security module 210 along with a storage component 211.

The hardware security module 210 performs the functions sent to it by the software security module 220 in accordance with the instructions indicated by the cryptographic operations component 224 and the key policy set by the key policy component 225. Thus, the hardware security module 210 can be used to generate cryptographic keys and perform cryptographic operations such as symmetric and asymmetric encryption, decryption, signatures and verification of digital signatures, creation of a message authentication code (MAC), MAC verification or a shared secret agreement. Furthermore, the hardware security module 210 can also support more advanced cryptographic primitives such as encryption retaining the FPE format, secret sharing, secret transfer, and commitment schemes.

The hardware security module 210 may also create aliases for specific cryptographic keys, so that each key can perform a limited number of cryptographic operations. For example, for an AES key with encryption and decryption operations, the hardware security module 210 may generate an alias for it which performs the encryption operation only. Without using key aliases, such an operation would be more complex, that is it could involve sending encrypted data using a public key in accordance with the RSA algorithm to the server, decrypting data on the server side, and then saving the data in the system database, so that it can be retrieved by authorized users of the said system. Thus, the proposed use of cryptographic key aliases allows for simplified data flow in the system, which in turn increases the performance of such a system even if its operating load is high.

In addition, the hardware security module 210 comprises a storage component 211 which has a separate encrypted area for storing sensitive data, e.g. cryptographic keys and data required to authenticate system queries, i.e. enclave. Thus, the storage component 211 of the hardware security module 210 is divided into an untrusted and trusted area - enclaves. Sensitive data to be stored in enclaves of the storage component 211 must first be subjected to an integrity and authenticity verification process and, i.e. validation. If the result of the validation is positive, these sensitive data can be stored in the enclaves of the storage component 211. Thanks to the above solution, neither the software security module 220 nor any other virtual machine launched in the presented environment or even a privileged user, for example a system administrator, or a hacker who has acquired a set of privileges within the system, has any access to the enclaves separated within the storage component 211, because this area is encrypted with a key known only to hardware security module 210. Therefore, only hardware security module 210 has access to sensitive data stored within its enclaves.

The system for encrypting data using cryptographic keys 200 also comprises a software security module 220. The software security module 220, through individual components, enables communication with the hardware security module 210. The software security module 220 comprises an authentication component 221, an interface component 222, a key management component 223, a cryptographic operations component 224, a key policy component 225, and an alarm component 226. Software security module 220 may operate within the same server as hardware security module 210 or within another server. The authentication component 221 allows the software security module 220 to authenticate when attempting to establish a connection between any application and the software security module 220. The connection request can be sent through an application running within the same server as the security software module 220 or another server. In this case, the hardware security module 210 can generate a digital signature using the cryptographic key contained in the storage component enclave 211 and sign the authentication message, so that it contains the hash value, the said signature as well as identification data of the hardware security module 210 and the software security module 220. Authentication can also be accomplished using other cryptographic protocols such as the Diffie-Hellman protocol, digital certificates or authenticated encryption. Thanks to this, clients connecting to the system are able to verify that they send a query to the correct system by checking the public key, and that there has been no violation in this system. Authentication is guaranteed by an external trusted service.

The interface component 222 provides at least one interface to interact with the security software module 220. An interface can be understood as, for example, the Application Programming Interface (API) used to interact with cryptographic keys, digital certificates, etc.

The key management component 223 allows accessing keys loaded in the secure enclave of the storage component 211 of the hardware security module 210.

The cryptographic operations component 224 allows providing instructions for performing a cryptographic operation using an available key and performing this operation.

The key policy component 225 allows, after receiving program instructions, setting at least one key policy for at least one cryptographic key.

The alarm component 226 allows registering and notifying the system 200 user about specific activities performed within it, for example creation of a cryptographic key.

### Other features of the method and the system

Due to the fact that data processing takes place in a dedicated, programmable machine, the conditions of the "machine or transform test" are met, and the idea is not abstract. One of skill in the art can readily appreciate that the above-described method of encrypting data using cryptographic keys can be performed and/or controlled by means of one or more computer programs. Such computer programs are usually implemented by using computer resources on a computer device. Applications are stored on a non-transitory medium. An example of a non-transitory carrier is nonvolatile memory, for example flash memory or volatile memory, for example RAM. Computer instructions are implemented by the processor. These memories are examples of recording media for storing computer programs containing computer-implemented instructions for carrying out all the steps of the computer-implemented method according to the technical concept presented herein.

Although the method and system presented herein have been illustrated, described, and defined with reference to specific embodiments, such references and implementation examples in the said specification do not imply any limitation on the method and system presented. It will, however, become evident that various modifications and changes can be made to them without departing from a broader scope of the technical concept. The preferred embodiments shown are merely examples, and they do not exhaust the scope of the technical concept set out herein.

Accordingly, the scope of protection is not limited to the preferred embodiments described in the specification.

## Claims

1. A computer-implemented method of encrypting data using cryptographic keys, including the following steps:
- creating (101) a cryptographic key using the interface component (222) of the software security module (220),
- saving (102) the generated key using the interface component (222) of the software security module (220) in the storage component enclave (211) of the hardware security module (210),
- determining (103) alias lifetime using the interface component (222) of the software security module (220),
- selecting (104) the range of IP addresses to which the given alias is to be limited using the interface component (222) of the software security module (220),
- indicating (105) for which cryptographic operations a given alias may be used using the interface component (222) of the software security module (220),
- saving (106) the created alias in memory using the interface component (222) of the software security module (220),
- performing (107) cryptographic operations with an alias using the cryptographic operations component (224),
- recording (108) each cryptographic operation performed in the system (200) using the alarm component (226) of the software security module (220),
- storing (109) in the storage component (211) data related to the performed cryptographic operation using the hardware security module (210).

2. Method according to claim 2, wherein the cryptographic operation (107) comprises the following steps:
- downloading (1071) data and alias from the ordering system (client),
- checking (1072) if the alias identifier matches the alias token,
- checking (1073) the compliance of the ordered operation with the key type,
- checking (1074) if the restrictions on alias usage specified in the alias policy are met,
- returning an error (1075) in case of a negative verification of any of the previous three steps
or
- performing (1076) a cryptographic operation using the key to which an alias is assigned on the downloaded data, in the case of a positive result of all verifications carried out in the previous three steps and forwarding the result of the operation to the ordering system.

3. A computer program comprising program code means for performing all steps of the computer-implemented method of claim 1 or 2 when the said program is running on a computer.

4. A computer-readable medium storing computer instructions performing all steps of the computer-implemented method according to claim 1 or 2 implemented on the computer.

5. The system for implementing the method according to claim 1 or 2 comprising a hardware security module (210) with a storage component (211) and a software security module (220) with an authentication component (221), an interface component (222), a key management component (223), a cryptographic operation component (224), a key policy component (225), and an alarm component (226) **characterized in that** the hardware security module (210) is adapted to create aliases using cryptographic keys stored by the storage component (211).

6. The system for implementing the method according to claim 5 **characterized in that** the storage component (211) of the hardware security module (210) comprises enclaves adapted to store sensitive data.
